# EUROPÄISCHE PATENTSCHRIFT

(11) **EP 3 757 364 B1**
(45) Veröffentlichungstag und Bekanntmachung des Hinweises auf die Patenterteilung: **26.01.2022**
(21) Anmeldenummer: 20177307.4
(22) Anmeldetag: 29.05.2020
(51) Int. Cl.: F01N 3/20, B01F 5/04, B01F 5/06, F01N 3/28

(54) **MISCHER FÜR EINE SCR-ABGASBEHANDLUNGSANLAGE**
MIXER FOR A SCR EXHAUST TREATMENT SYSTEM
MÉLANGEUR POUR UN SYSTÈME SCR DE TRAITEMENT DES GAZ D'ÉCHAPPEMENT

(30) Priorität: 28.06.2019 DE 102019117459
(43) Veröffentlichungstag der Anmeldung: 30.12.2020
(73) Patentinhaber: Purem GmbH, 66539 Neunkirchen (DE)
(72) Erfinder: Kurpejovic, Enver, 73230 Kirchheim unter Teck (DE); Friedrich, Florian, 73733 Esslingen (DE); Hass, Ruben, 70599 Stuttgart (DE); Vempati, Krishna Kumar, 73730 Esslingen (DE); Hoeckel, Sandra, 73730 Esslingen (DE)
(74) Vertreter: Ruttensperger Lachnit Trossin Gomoll

(56) Entgegenhaltungen:
- WO-A1-2015/012829
- US-A1- 2019 010 850

## Beschreibung

Die vorliegende Erfindung betrifft einen Mischer für eine Abgasanlage einer Brennkraftmaschine, welcher dazu dient, eine Durchmischung von in den Abgasstrom eingespritztem Reaktionsmittel, beispielsweise einer Harnstoff/WasserLösung, mit dem Abgas herbeizuführen.

Zum Verringern des Stickoxidanteils in dem von einer Diesel-Brennkraftmaschine ausgestoßenen Abgas ist es bekannt, zur Durchführung einer selektiven katalytischen Reduktion (SCR) ein Reaktionsmittel in den Abgasstrom einzuspritzen, um an einem SCR-Katalysator eine katalytische Umsetzung des im Abgas transportierten Stickoxids zu erzeugen. Für eine effiziente Durchführung dieser katalytischen Umsetzung ist eine gute Durchmischung des Reaktionsmittels mit dem Abgas erforderlich.

Aus der WO 2015/012829 A1 ist ein Mischer gemäß dem Oberbegriff des Anspruchs 1 bekannt, bei welchem durch eine stromaufwärtige Ablenkplatte, eine stromabwärtige Ablenkplatte, ein zwischen den beiden Ablenkplatten sich erstreckendes Ablenkelement und eine entlang des Außenumfangs der stromabwärtigen Ablenkplatte verlaufende Umfangswand ein Reaktionsmitteleinspritzkanal begrenzt ist.

Aus der US 2019/0010850 A1 ist ein Mischer bekannt, bei welchem in einem zwischen in Strömungsrichtung aufeinanderfolgenden Ablenkplatten gebildeten Volumen ein in Umfangsrichtung durch eine gebogene Innenwand begrenzter Reaktionsmitteleinspritzkanal gebildet ist.

Es ist die Aufgabe der vorliegenden Erfindung, einen Mischer für eine Abgasanlage einer Brennkraftmaschine bereitzustellen, welcher bei Erzeugung eines geringen Strömungswiderstands für das in einer Abgasanlage strömende Abgas bei kompakter Bauart eine effiziente Durchmischung eines in den Abgasstrom eingespritzten Reaktionsmittels mit dem Abgas herbeiführt.

Erfindungsgemäß wird diese Aufgabe gelöst durch einen Mischer für eine Abgasanlage einer Brennkraftmaschine gemäß Anspruch 1. Dieser umfasst:
- ein erstes Mischerteil mit einem plattenartigen Körper mit einer bezüglich einer Abgas-Hauptströmungsrichtung in Richtung stromaufwärts orientiert anzuordnenden Anströmseite und einer bezüglich der Abgas-Hauptströmungsrichtung in Richtung stromabwärts orientiert anzuordnenden Abströmseite,
- ein an der Abströmseite des ersten Mischerteils angeordnetes zweites Mischerteil mit einer in Abstand zu dem plattenartigen Körper des ersten Mischerteils angeordneten Bodenwand und zwei von der Bodenwand ausgehenden und auf den plattenartigen Körper des ersten Mischerteils sich
zu erstreckenden und an dem ersten Mischerteil festgelegten Seitenwänden, wobei das zweite Mischerteil mit seiner Bodenwand und seinen Seitenwänden und das erste Mischerteil mit seinem plattenartigen Körper einen Reaktionsmitteleinspritzkanal zur Aufnahme von Reaktionsmittel in einer Reaktionsmittel-Haupteinspritzrichtung begrenzen, und wobei in dem plattenartigen Körper des ersten Mischerteils wenigstens eine, vorzugsweise eine einzige, zu dem Reaktionsmitteleinspritzkanal offene Abgas-Hauptdurchtrittsöffnung vorgesehen ist und eine Mehrzahl von an dem Reaktionsmitteleinspritzkanal vorbei führenden Abgas-Nebendurchtrittsöffnungen vorgesehen ist.

Zur Aufnahme von Reaktionsmittel von einem beispielsweise außerhalb eines Abgasrohrs angeordneten Injektor ist der Reaktionsmitteleinspritzkanal in einem ersten Bereich des Außenumfangs des ersten Mischerteils an einem Aufnahmeende zur Aufnahme von Reaktionsmittel offen.

Um das in den Reaktionsmitteleinspritzkanal eingespritzte Reaktionsmittel bzw. das bereits im Reaktionsmitteleinspritzkanal erzeugte Gemisch aus Reaktionsmittel und Abgas weiterleiten zu können, ist der Reaktionsmitteleinspritzkanal an einem Abgabeende zur Abgabe von Reaktionsmittel oder/und Abgas offen.

Für eine verstärkte Durchmischung von Abgas und Reaktionsmittel am Abgabeende des Reaktionsmitteleinspritzkanals wird gesorgt, indem kennzeichnend die Bodenwand des zweiten Mischerteils sich mit einem Bodenwand-Verlängerungsbereich über die Seitenwände des zweiten Mischerteils hinaus erstreckt.

Mit dem gemäß den Prinzipien der vorliegenden Erfindung aufgebauten Mischer wird eine mit wenigen Bauteilen zu realisierende, einfach und kostengünstig herstellbare, kompakte Ausgestaltung erreicht. Der Mischer kann leicht an den für verschiedene Arten von Injektoren bereitzustellenden Mischprozess angepasst werden und ist hinsichtlich der von verschiedenen Arten von Injektoren erzeugten unterschiedlichen Sprühwinkel unempfindlich.

Für eine einfach herzustellende Ausgestaltung wird weiter vorgeschlagen, dass der plattenartige Körper des ersten Mischerteils und die Bodenwand des zweiten Mischerteils zueinander im Wesentlichen parallel angeordnet sind, oder/und dass die beiden Seitenwände des zweiten Mischerteils zueinander im Wesentlichen parallel angeordnet sind, oder/und dass die beiden Seitenwände des zweiten Mischerteils zu der Bodenwand des zweiten Mischerteils oder/und dem plattenartigen Körper des ersten Mischerteils im Wesentlichen orthogonal angeordnet sind.

Ein stabiler und leicht beispielsweise in ein Abgasrohr zu integrierender Aufbau kann dadurch erhalten werden, dass an einem Außenumfang des ersten Mischerteils ein von dem plattenartigen Körper in Richtung von der Anströmseite weg sich erstreckender Umfangsrand vorgesehen ist.

Um dabei beispielsweise in Zusammenwirkung mit der Wandung eines Abgasrohrs einen bündigen Anschluss auch der Bodenwand an das Abgasrohr zu erreichen, wird vorgeschlagen, dass in dem ersten Bereich des Außenumfangs des ersten Mischerteils eine Außenumfangskontur der Bodenwand des zweiten Mischerteils im Wesentlichen einer Außenumfangskontur des ersten Mischerteils entspricht.

Um dabei die Durchmischung beeinträchtigende Leckageströmungen zu vermeiden, wird vorgeschlagen, dass der Bodenwand-Verlängerungsbereich sich im Wesentlichen bis zu einem zweiten Bereich des Außenumfangs des ersten Mischerteils erstreckt, und dass in dem zweiten Bereich des Außenumfangs des ersten Mischerteils eine Außenumfangskontur des Bodenwand-Verlängerungsbereichs des zweiten Mischerteils im Wesentlichen einer Außenumfangskontur des ersten Mischerteils entspricht.

Die Durchmischung von Abgas und Reaktionsmittel am Abgabeende des Reaktionsmitteleinspritzkanals kann dadurch weiter unterstützt werden, dass zwischen dem Bodenwand-Verlängerungsbereich des zweiten Mischerteils und dem plattenartigen Körper des ersten Mischerteils eine sich im Wesentlichen quer zu der Reaktionsmittel-Haupteinspritzrichtung erstreckende Ablenkwand angeordnet ist.

Um dabei eine definierte Strömungsumlenkung herbeizuführen, wird vorgeschlagen, dass die Ablenkwand im Wesentlichen W-förmig oder V-förmig ausgebildet ist.

Die Ablenkwand kann mit dem plattenartigen Körper des ersten Mischerteils, dem Bodenwand-Verlängerungsbereich des zweiten Mischerteils und jeder der Seitenwände des zweiten Mischerteils jeweils eine Haupt-Austrittsöffnung des Reaktionsmitteleinspritzkanals begrenzen. Somit wird eine definierte Strömungsführung am Abgabeende durch diese Haupt-Austrittsöffnung bzw. Haupt-Austrittsöffnungen gewährleistet.

Ein effizientes Einströmen von Abgas in den Reaktionsmitteleinspritzkanal kann dadurch unterstützt werden, dass die Abgas-Hauptdurchtrittsöffnung bezogen auf die Abgas-Hauptströmungsrichtung und einen zentralen Bereich des plattenartigen Körpers des ersten Mischerteils in einem von einem radial äußeren Ende der Abgas-Hauptdurchtrittsöffnung ausgehenden ersten radialen Erstreckungsbereich eine zunehmende Öffnungsbreite und in einem zu einem radial inneren Ende der Abgas-Hauptdurchtrittsöffnung führenden zweiten radialen Erstreckungsbereich eine abnehmende Öffnungsbreite aufweist, wobei eine Länge des zweiten radialen Erstreckungsbereichs größer ist, als eine Länge des ersten radialen Erstreckungsbereichs.

Um auch in einem Bereich neben dem Reaktionsmitteleinspritzkanal eine definierte und die Durchmischung von Abgas und Reaktionsmittel unterstützende Strömungsführung für das Abgas zu erreichen, wird vorgeschlagen, dass die Abgas-Nebendurchtrittsöffnungen eine Mehrzahl lochartig ausgebildeter erster Abgas-Nebendurchtrittsöffnungen umfassen, oder/und dass die Abgas-Nebendurchtrittsöffnungen eine Mehrzahl zweiter Abgas-Nebendurchtrittsöffnungen umfassen, wobei am ersten Mischerteil in Zuordnung zu jeder zweiten Abgas-Nebendurchtrittsöffnung ein Strömungsablenkelement vorgesehen ist.

In Zuordnung zu jeder zweiten Abgas-Nebendurchtrittsöffnung kann an dem plattenartigen Körper des ersten Mischerteils eine an der Abströmseite hervorstehende Ausformung zum Bereitstellen des Strömungsablenkelements vorgesehen sein. Die Ausformung kann beispielsweise im Wesentlichen die Form eines Kugelkalottensegments oder einer Ablenkklappe aufweisen.

Die Durchmischung von Abgas und Reaktionsmittel insbesondere dort, wo Reaktionsmittel aus dem Reaktionsmitteleinspritzkanal austritt, kann dadurch effizient gestaltet werden, dass am ersten Mischerteil im Bereich wenigstens einer, vorzugsweise jeder Haupt-Austrittsöffnung eine zweite Abgas-Nebendurchtrittsöffnung vorgesehen ist, wobei das dieser zweiten Abgas-Nebendurchtrittsöffnung zugeordnete Strömungsablenkungselement durch diese hindurchtretendes Abgas in Richtung vom Reaktionsmitteleinspritzkanal weg ablenkt.

In dem zweiten Mischerteil kann eine Mehrzahl von Neben-Austrittsöffnungen vorgesehen sein. Auch das Vorsehen derartiger Neben-Austrittsöffnungen unterstützt die Durchmischung von Abgas und Reaktionsmittel.

Beispielsweise können die Neben-Austrittsöffnungen eine Mehrzahl lochartig ausgebildeter erster Neben-Austrittsöffnungen umfassen. Alternativ oder zusätzlich können die Neben-Austrittsöffnungen eine Mehrzahl zweiter Neben-Austrittsöffnungen umfassen, wobei am zweiten Mischerteil in Zuordnung zu jeder zweiten Neben-Austrittsöffnung ein Strömungsablenkelement vorgesehen ist.

Auch in Zuordnung zu jeder zweiten Neben-Austrittsöffnung an dem zweiten Mischerteil kann eine Ausformung zum Bereitstellen des Strömungsablenkelements vorgesehen sein, wobei beispielsweise die Ausformung im Wesentlichen die Form eines Kugelkalottensegments oder einer Ablenkklappe aufweist.

Die definierte Strömungsführung im Bereich der Haupt-Austrittsöffnung/en kann dadurch unterstützt werden, dass an wenigstens einer, vorzugsweise jeder der Seitenwände des zweiten Mischerteils ein in Richtung vom Reaktionsmitteleinspritzkanal weg orientiertes Strömungsablenkelement vorgesehen ist. Beispielsweise kann ein derartiges Strömungsablenkelement die Form einer Ablenkklappe aufweisen.

Für einen einfach zu realisierenden und gegen thermische Einflüsse besonders resistenten Aufbau wird vorgeschlagen, dass das erste Mischerteil oder/und das zweite Mischerteil als Blechumformteil ausgebildet ist.

Die Erfindung betrifft ferner eine Abgasanlage für eine Brennkraftmaschine, umfassend einen von Abgas durchströmbaren Abgaskanal und einen in dem Abgaskanal derart angeordneten, erfindungsgemäß aufgebauten Mischer, dass das erste Mischerteil mit seiner Anströmseite im Wesentlichen orthogonal zur Abgas-Hauptströmungsrichtung im Bereich des Mischers orientiert ist.

Eine Reaktionsmitteleinspritzanordnung kann zum Einspritzen von Reaktionsmittel in den Reaktionsmitteleinspritzkanal vorgesehen sein.

Dabei kann eine besonders effiziente Durchmischung von Abgas und Reaktionsmittel dadurch unterstützt werden, dass die Reaktionsmittel-Haupteinspritzrichtung im Wesentlichen orthogonal zur Abgas-Hauptströmungsrichtung im Abgaskanal an der Anströmseite des ersten Mischerteils ist.

Bei einer gleichermaßen für eine sehr gute Durchmischung von Reaktionsmittel und Abgas sorgenden Ausgestaltung kann vorgesehen sein, dass die Reaktionsmitteleinspritzanordnung zum Einspritzen von Reaktionsmittel in den Reaktionsmitteleinspritzkanal durch die Abgas-Hauptdurchtrittsöffnung angeordnet ist.

Die vorliegende Erfindung wird nachfolgend mit Bezug auf die beiliegenden Figuren detailliert beschrieben. Es zeigt:
- Fig. 1: die Ansicht eines Mischers, betrachtet von einer Anströmseite eines ersten Mischerteils desselben her;
- Fig. 2: eine Seitenansicht des Mischers der Fig. 1, betrachtet in Richtung einer Reaktionsmittel-Haupteinspritzrichtung in Fig. 1;
- Fig. 3: eine perspektivische Ansicht des Mischers der Fig. 1, betrachtet von der Abströmseite des ersten Mischerteils desselben her;
- Fig. 4: eine weitere perspektivische Ansicht des Mischers der Fig. 1;
- Fig. 5: eine Transparent-Ansicht des Mischers der Fig. 1;
- Fig. 6: eine Transparent-Ansicht des Mischers der Fig. 1, betrachtet von der Anströmseite desselben her, mit einem dem Mischer zugeordneten Injektor;
- Fig. 7: eine der Fig. 6 entsprechende Ansicht einer alternativen Ausgestaltungsart;
- Fig. 8: eine Längsschnittansicht einer Abgasanlage mit einem Mischer und einem diesem zugeordneten Injektor;
- Fig. 9: eine Längsschnittansicht einer alternativ ausgestalteten Abgasanlage;
- Fig. 10: eine weitere Längsschnittansicht einer alternativ ausgestalteten Abgasanlage;
- Fig. 11: eine nicht erfindungsgemäße Abwandlung der in Figur 9 dargestellten Abgasanlage.

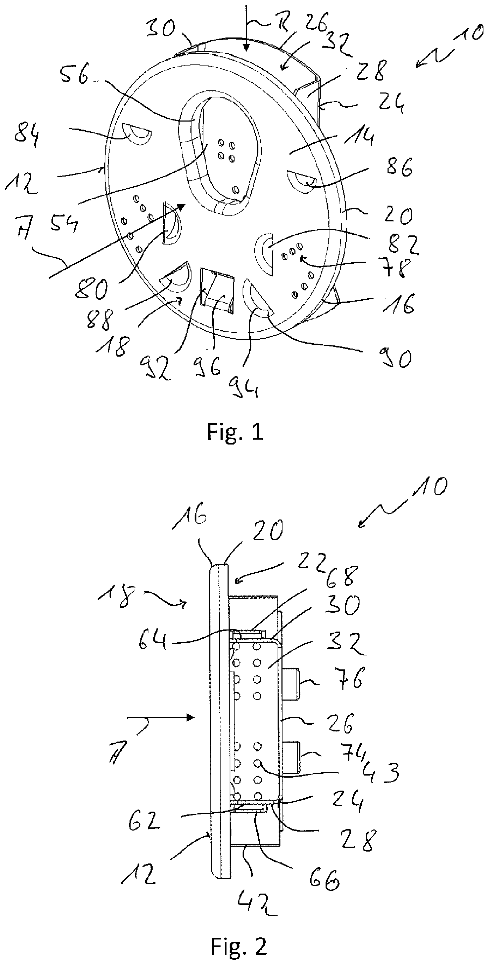

Die Fig. 1 bis 5 zeigen in verschiedenen Darstellungen einen allgemein mit 10 bezeichneten Mischer für eine Abgasanlage einer Brennkraftmaschine, beispielsweise in einem Kraftfahrzeug. Der Mischer 10 umfasst ein als Blechumformteil bereitgestelltes erstes Mischerteil 12 mit einem im Wesentlichen ebenen, plattenartigen Körper 14. An einem Außenumfang 16 des ersten Mischerteils 12 schließt an den plattenartigen Körper 14 ein in Richtung von einer in Fig. 1 erkennbaren Anströmseite 18 weg sich erstreckender, zumindest bereichsweise zylindrischer Rand 20 an. Mit diesem Rand 20 kann der Mischer 10 an der Innenoberfläche eines Abgasrohrs anliegend angeordnet bzw. festgelegt werden.

An der der Anströmseite 18 entgegengesetzt orientierten Abströmseite 22 des ersten Mischerteils 12 ist ein ebenfalls als Blechumformteil bereitgestelltes zweites Mischerteil 24 vorgesehen. Das zweite Mischerteil 24 ist mit einer Bodenwand 26 und an seitlichen Bereichen von dieser abgebogenen Seitenwänden 28, 30 aufgebaut. Die Seitenwände 28, 30 erstrecken sich, ausgehend von der Bodenwand 26, auf die Abströmseite 22 des plattenartigen Körpers 14 des ersten Mischerteils 12 zu und sind daran beispielsweise durch Verschweißung festgelegt.

Das zweite Mischerteil 24 ist mit seiner Bodenwand 26 im Wesentlichen parallel zum plattenartigen Körper 14 des ersten Mischerteils 12 angeordnet. Die beiden Seitenwände 28, 30 erstrecken sich im Wesentlichen orthogonal zur Bodenwand 26 bzw. dem plattenartigen Körper 14 und zueinander im Wesentlichen parallel. Auf diese Art und Weise wird durch den plattenartigen Körper 14 des ersten Mischerteils 12, die Bodenwand 26 des zweiten Mischerteils 24 und die beiden Seitenwände 28, 30 des zweiten Mischerteils 24 ein im Querschnitt näherungsweise rechteckiger Reaktionsmitteleinspritzkanal 32 begrenzt.

Ein Aufnahmeende 34 des Reaktionsmitteleinspritzkanals 32 liegt in einem ersten Bereich 36 des Außenumfangs 16 des ersten Mischerteils 12. Die Bodenwand 26 des zweiten Mischerteils 24 ist im Bereich des Aufnahmeendes 34 des Reaktionsmitteleinspritzkanals 32 mit einer an die Außenumfangskontur des ersten Mischerteils 12 angepassten Außenumfangskontur ausgebildet, so dass auch das zweite Mischerteil 24 im Wesentlichen bündig an die Innenoberfläche eines Abgasrohrs anschließen kann und in diesem Bereich Leckageströmungen weitestgehend vermieden werden können. Bei beispielsweise im Wesentlichen kreisrunder Querschnittskontur eines den Mischer 10 aufnehmenden Abgasrohrs kann die Außenumfangskontur des ersten Mischerteils im Wesentlichen einer Kreiskontur entsprechen. Auch die Außenumfangskontur der Bodenwand 26 im Bereich des Aufnahmeendes 34 des Reaktionsmitteleinspritzkanals 32 kann dementsprechend einer Kreisreform bzw. einem Kreissegment entsprechen.

Mit einem Bodenwandung-Verlängerungsbereich 38 erstreckt das zweite Mischerteil 24 sich über die Seitenwände 28, 30 hinaus bis zu einem zweiten Bereich 40 des Außenumfangs 16 des ersten Mischerteils 12. Auch im Bodenwandung-Verlängerungsbereich 38 endet das zweite Mischerteil 24 mit einer Außenumfangskontur, die im Wesentlichen der Außenumfangskontur des ersten Mischerteils 12 entspricht, um auch in diesem Bereich einen im Wesentlichen bündigen Anschluss des ersten Mischerteils 24 an die Innenoberfläche eines Abgasrohrs zu erlangen.

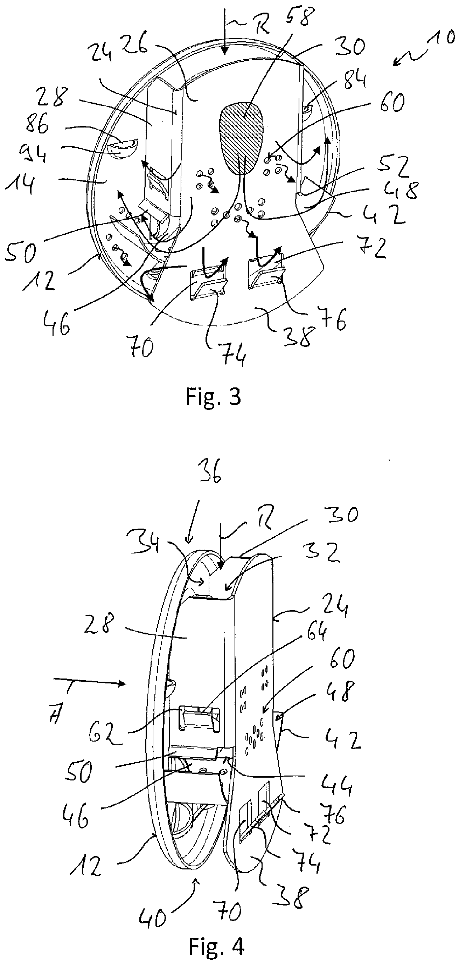

Zwischen dem Bodenwandung-Verlängerungsbereich 38 und dem plattenartigen Körper 14 des ersten Mischerteils 12 ist eine beispielsweise ebenfalls als Blechumformteil bereitgestellte Ablenkwand 42 vorgesehen. Die Ablenkwand 42 weist eine Mehrzahl von Durchgriffsöffnungen 43 auf und ist im dargestellten Ausgestaltungsbeispiel mit näherungsweise W-förmiger Gestalt ausgebildet und lenkt einen im Reaktionsmitteleinspritzkanal 32 gebildeten Strom aus Reaktionsmittel und Abgas zu jeweiligen im Bereich eines Abgabeendes 44 des Reaktionsmitteleinspritzkanals 32 gebildeten Haupt-Austrittsöffnungen 46, 48. Jede dieser Haupt-Austrittsöffnungen 46, 48 ist begrenzt durch den plattenartigen Körper 14 des ersten Mischerteils 12, eine der beiden Seitenwände 28, 30, die Ablenkwand 42 und den Bodenwandung-Verlängerungsbereich 38. Wie durch Strömungspfeile in Fig. 3 angedeutet, strömt das Gemisch aus Reaktionsmittel und Abgas unter der Leitwirkung des Ablenkelements 42 näherungsweise in Umfangsrichtung bezüglich einer Abgas-Hauptströmungsrichtung A, mit welcher das Abgas auf die Anströmseite 18 des ersten Mischerteils 12 zu strömt.

Um die Strömungsführung im Bereich der Haupt-Austrittsöffnungen 46, 48 zu unterstützen, sind an den Seitenwänden 28, 30 Strömungsablenkelemente 50, 52 vorgesehen, die die Form von Ablenkklappen haben, welche in Richtung vom Reaktionsmitteleinspritzkanal 32 bzw. vom Abgabeende 44 desselben weg orientiert sind. Auf diese Art und Weise kann im Bereich der Haupt-Austrittsöffnungen 46, 48 ein zur Strömungsbeschleunigung und somit zur verbesserten Durchmischung beitragender Düseneffekt generiert werden.

Um den Eintritt von Abgas in den Reaktionsmitteleinspritzkanal 32 zu ermöglichen, ist im plattenartigen Körper 14 des ersten Mischerteils 12 eine Abgas-Hauptdurchtrittsöffnung 54 ausgebildet. Diese liegt der Bodenwand 26 des zweiten Mischerteils 24 gegenüber und ist von einem in Richtung von der Anströmseite 28 weg sich erstreckenden Rand 56 umgeben. Die Abgas-Hauptdurchtrittsöffnung 54 hat näherungsweise eine tropfenförmige Gestalt, bei welcher, ausgehend von einem bezüglich eines zentralen Bereichs des plattenartigen Körpers 14 und bezüglich der Abgas-Hauptströmungsrichtung A radial äußeren Ende in einem ersten radialen Erstreckungsbereich die Breite, also die Erstreckung in Umfangsrichtung, zunächst zunimmt und dann in einem zweiten Erstreckungsbereich in Richtung zu einem radial inneren Ende der Abgas-Hauptdurchtrittsöffnung 54 wieder abnimmt. Dabei ist die Erstreckungslänge, in welcher die Breite wieder abnimmt, größer als die Erstreckungslänge, in welcher, ausgehend vom radial äußeren Ende der Abgas-Hauptdurchtrittsöffnung, die Breite zunächst zunimmt.

Der in der Abgas-Hauptströmungsrichtung A auf die Anströmseite 18 des ersten Mischerteils 12 zu strömende Abgasstrom bzw. ein Teil davon tritt durch die Abgas-Hauptdurchtrittsöffnung 54 hindurch in den Reaktionsmitteleinspritzkanal 32 ein. Reaktionsmittel, welches in einer Reaktionsmittel-Haupteinspritzrichtung R in den Reaktionsmitteleinspritzkanal 32 eingespritzt wird, wird zumindest teilweise von dem durch die Abgas-Hauptdurchtrittsöffnung 54 hindurchströmenden Abgas in Richtung auf die Bodenwand 26 zu abgelenkt, so dass an der Bodenwand 26 ein in Fig. 3 eingezeichneter Bereich 58 entsteht, in welchem der abgelenkte Reaktionsmittelstrom auf die Bodenwand 26 auftrifft und diese benetzt. Diese Benetzung mit Reaktionsmittel führt zu einer verstärkten Verdampfung, da die Bodenwand 26, ebenso wie alle anderen Bereiche des Mischers 10, durch den den Mischer 10 umströmenden bzw. durchströmenden Abgasstrom auf eine vergleichsweise hohe Temperatur aufgeheizt wird.

Der durch die Abgas-Hauptdurchtrittsöffnung 54 in den Reaktionsmitteleinspritzkanal 32 eintretende Teil des Abgasstroms vermischt sich im Reaktionsmitteleinspritzkanal 32 bereits teilweise mit dem in diesen eingespritzten Reaktionsmittel und verlässt, wie vorangehend bereits dargelegt, den Reaktionsmitteleinspritzkanal 32 größtenteils über die beiden in Zuordnung zu den Seitenwänden 28, 30 bereitgestellten Haupt-Austrittsöffnungen 46, 48. Ein weiterer Teil des im Reaktionsmitteleinspritzkanal 32 gebildeten Gemisches aus Abgas und Reaktionsmittel verlässt den Reaktionsmitteleinspritzkanal 32 über die Durchgriffsöffnungen 43 in der Ablenkungswand 42 und über in der Bodenwand 26 bzw. am Bodenwand-Verlängerungsbereich 38 gebildete, lochartige erste Neben-Austrittsöffnungen 60. Diese lochartigen ersten Neben-Austrittsöffnungen 60 können in mehreren Gruppen an der Bodenwand 26 bzw. am Bodenwand-Verlängerungsbereich 38 angeordnet sein. Im Bereich jeder Seitenwand 28, 30 ist eine zweite Neben-Austrittsöffnung 62 bzw. 64 vorgesehen. Während in Zuordnung zu den ersten Neben-Austrittsöffnungen 60 kein Strömungsablenkelement vorgesehen ist, ist in Zuordnung zu jeder dieser zweiten Neben-Austrittsöffnungen 62, 64 ein Strömungsablenkelement 66, 68 vorgesehen, welches durch eine Ausformung in Form einer Ablenkklappe bereitgestellt ist. Beispielsweise kann jede zweite Neben-Austrittsöffnung 62, 64 mit dem dieser zugeordneten Strömungsablenkelement 66, 68 durch Erzeugen eines U-förmigen Einschnitts in der zugeordneten Seitenwand 28, 30 und durch Ausformen bzw. Ausbiegen des Strömungsablenkelements 66, 68 aus der Ebene der jeweiligen Seitenwand 26 bereitgestellt werden.

Wie in Fig. 3 erkennbar, unterstützt der den Reaktionsmitteleinspritzkanal 32 verlassende Strom aus Abgas und Reaktionsmittel die in Umfangsrichtung orientierte Strömung des im Reaktionsmitteleinspritzkanal 32 generierten Gemisches aus Reaktionsmittel und Abgas.

Auch im Bodenwand-Verlängerungsbereich 38 sind derartige zweite Neben-Austrittsöffnungen 70, 72 mit diesen zugeordneten Strömungsablenkelementen 74, 76 vorgesehen. Auch diese Strömungsablenkelemente 74, 76 sorgen dafür, dass das in diesem Bereich weiter strömende Gemisch aus Reaktionsmittel und Abgas von der Abgas-Hauptströmungsrichtung A abweichend umgelenkt werden, was zur verstärkten Vermischung von Abgas und Reaktionsmittel beiträgt.

Im ersten Mischerteil 12 sind in Bereichen neben dem Reaktionsmitteleinspritzkanal 32 erste Abgas-Nebendurchtrittsöffnungen 78 mit im Wesentlichen lochartiger Gestalt vorgesehen. Die ersten Abgas-Nebendurchtrittsöffnungen 78 sind, wie in Fig. 1 erkennbar, am plattenartigen Körper 14 des ersten Mischerteils 12 derart in Gruppen angeordnet, dass sie in den Bereichen liegen, in welchen das bzw. ein Teil des Gemisches aus Abgas und Reaktionsmittel den Reaktionsmitteleinspritzkanal 32 im Bereich der Haupt-Austrittsöffnungen 46, 48 verlässt. Dadurch wird dieser Strom in Richtung der Abgas-Hauptströmungsrichtung A abgelenkt, so dass grundsätzlich eine spiralartige bzw. schraubenartige Strömung an der stromabwärtigen Seite 22 des ersten Mischerteils 12 erzwungen wird.

Im plattenartigen Körper des ersten Mischerteils 12 sind ferner mehrere zweite Abgas-Nebendurchtrittsöffnungen 80, 82, 84, 86, 88, 90, 92 vorgesehen. Während auch jeder ersten Abgas-Nebendurchtrittsöffnung 78 kein Strömungsablenkelement zugeordnet ist, ist jeder zweiten Abgas-Nebendurchtrittsöffnung 80, 82, 84, 86, 88, 90, 92 ein durch eine Ausformung des plattenartigen Körpers 14 des ersten Mischerteils 12 bereitgestelltes Strömungsablenkelement 94 bzw. 96 zugeordnet. Während die in Zuordnung zu den mit halbkreisartiger Kontur ausgebildeten zweiten Abgas-Nebendurchtrittsöffnungen 80, 82, 84, 86, 88, 90 bereitgestellten Strömungsablenkelemente 94 die Form eines Segments einer Kugelkalotte aufweisen, ist das Strömungsablenkelement 96, welches in Zuordnung zur zweiten Abgas-Nebendurchtrittsöffnung 92 vorgesehen ist, in Form einer Ablenkklappe ausgebildet.

Die beiden zweiten Abgas-Nebendurchtrittsöffnungen 80, 82 sind am plattenartigen Körper 14 des ersten Mischerteils 12 so positioniert, dass sie im Bereich der Haupt-Austrittsöffnungen 46, 48 liegen. Die diesen beiden zweiten Abgas-Nebendurchtrittsöffnungen 80, 82 zugeordneten Strömungsablenkelemente 94 sind so orientiert, dass sie das durch diese zweiten Abgas-Nebendurchtrittsöffnungen 80, 82 hindurchtretende Abgas in eine Richtung umlenken, welche im Wesentlichen der Strömungsrichtung des den Reaktionsmitteleinspritzkanal 32 im Bereich der Haupt-Austrittsöffnungen 46, 48 verlassenden Gemisches entspricht, so dass diese Strömung unterstützt wird. Auch die zweiten Abgas-Nebendurchtrittsöffnungen 84, 86, 88, 90 sind so positioniert, dass die diesen zugeordneten Strömungsablenkelemente 94 die Strömung in Umfangsrichtung unterstützen. Die zweite Abgas-Nebendurchtrittsöffnung 92 mit dem nach Art einer Ablenkklappe ausgebildeten Strömungsablenkelement 96 ist so positioniert, dass durch das Strömungsablenkelement 96 der durch diese Abgas-Nebendurchtrittsöffnung 92 hindurchtretende Abgasstrom in Richtung auf die vom Reaktionsmitteleinspritzkanal 32 abgewandt liegende Rückseite der Ablenkwand 42 zu strömt. Durch die mit geschwungener W-Form ausgebildete Ablenkwand 42 wird auch dieser Abgasstrom in Umfangsrichtung abgelenkt und unterstützt somit gleichermaßen die Verwirbelung und somit die Durchmischung von Abgas und Reaktionsmittel.

Bei dem vorangehend beschriebenen Aufbau eines Mischers 10 tritt der Großteil des an der Anströmseite 18 auf das erste Mischerteil 12 auftreffenden Abgasstroms durch die Abgas-Hauptdurchtrittsöffnung 54 hindurch und vermischt sich mit dem in der Reaktionsmittel-Haupteinspritzrichtung R eingespritzten Reaktionsmittel. Der durch die Abgas-Nebendurchtrittsöffnungen 78, 80, 82, 84, 86, 88, 90, 92 hindurchtretende Teil des Abgases unterstützt die Verwirbelung an der Abströmseite 22 des ersten Mischerteils 12. Die Ablenkung des in der Reaktionsmittel-Haupteinspritzrichtung R in den Reaktionsmitteleinspritzkanal 32 eingespritzten Reaktionsmittels auf die Bodenwand 26 des zweiten Mischerteils 24 zu führt zu einem verstärkten Kontakt des Reaktionsmittels mit der erhitzten Bodenwand 26 und somit zu einer verstärkten Abdampfung. Das so gebildete Gemisch aus Reaktionsmittel und Abgas wird, unterstützt durch die mit geschwungener W-Form ausgebildete Ablenkwand 42 zunächst im Wesentlichen in Umfangsrichtung abgelenkt und wird dann durch den durch die Abgas-Nebendurchtrittsöffnungen 78, 80, 82, 84, 86, 88, 90, 92 hindurchtretenden Teil des Abgases in Richtung der Abgas-Hauptströmungsrichtung A abgelenkt bzw. mitgenommen.

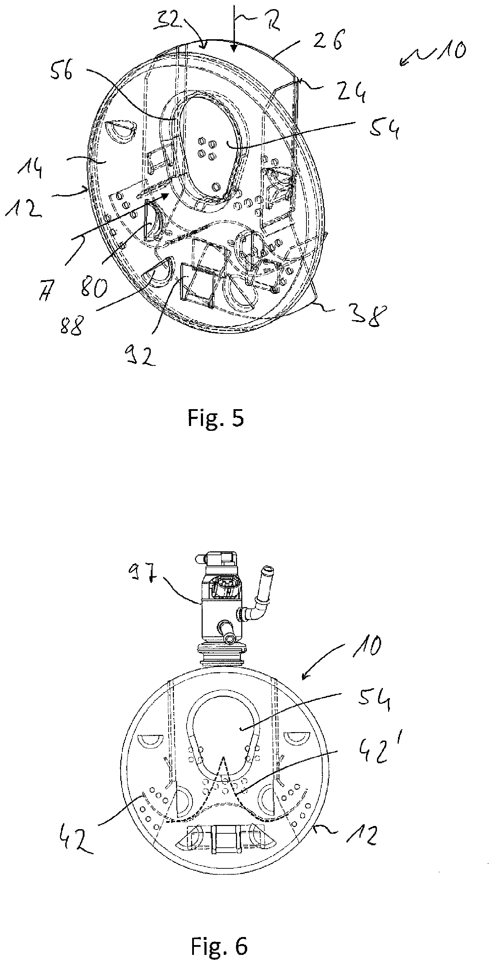

Die Fig. 6 zeigt den Mischer 10 von seiner Anströmseite 18 her betrachtet und veranschaulicht, dass dies Ablenkwand 42 auch mit anderer Gestalt ausgebildet sein kann. Während die Fig. 6 mit der doppelten gestrichelten Linie den W-förmigen, geschwungenen Verlauf der Ablenkwand 42 zeigt, der auch in Fig. 5 erkennbar ist, ist mit gestrichelter Linie ein Verlauf der Ablenkwand 42' dargestellt, bei welchem die Ablenkwand näherungsweise eine geschwungene V-Form aufweist.

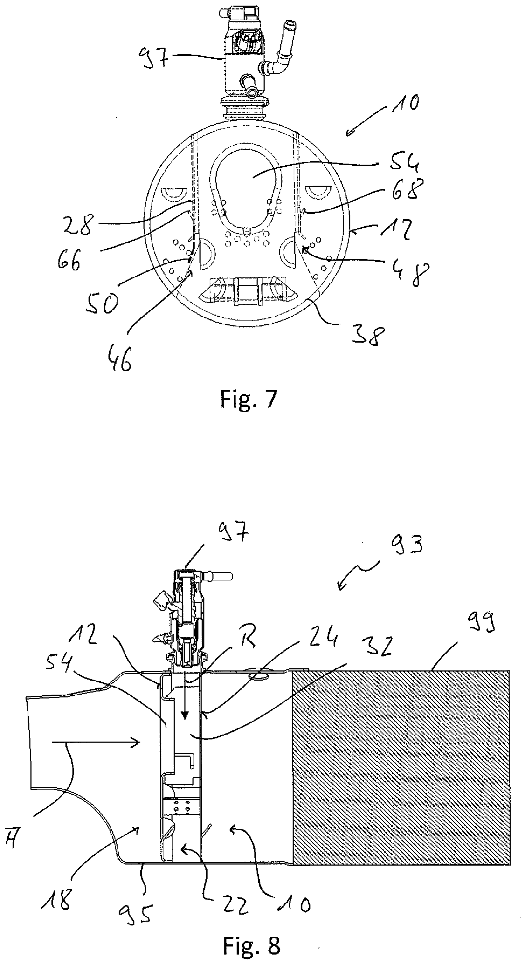

Die Fig. 7 veranschaulicht eine Variation des zweiten Mischerteils 24 jeweils im Bereich der Haupt-Austrittsöffnungen 46, 48. Wie durch eine dicke gestrichelte Linie in Fig. 7 veranschaulicht, können die Seitenwände 28, 30 eine andere, insbesondere eine längere Erstreckung in Richtung vom Aufnahmeende 34 des Reaktionsmitteleinspritzkanals 32 weg geführt sein. Die an diesen vorgesehenen Strömungsablenkelemente 66, 68 können gleichermaßen mit längerer oder kürzerer Erstreckung und mit anderem Anstellwinkel als beispielsweise in Fig. 6 dargestellt ausgebildet sein.

Die Fig. 7 zeigt weiter, dass der Mischer 10 auch ohne der zwischen dem plattenartigen Körper 14 des ersten Mischerteils 12 und dem Bodenwand-Verlängerungsbereich 38 des zweiten Mischerteils 24 vorgesehenen Ablenkwand aufgebaut sein kann. Auch bei dieser Ausgestaltung wird insbesondere durch die Positionierung der verschiedenen Abgas-Nebendurchtrittsöffnungen und der diesen zum Teil zugeordneten Strömungsablenkelemente eine definierte Strömungsablenkung des den Reaktionsmitteleinspritzkanal 32 verlassenden Gemisches aus Abgas und Reaktionsmittel in Umfangsrichtung erreicht.

Es ist weiter darauf hinzuweisen, dass selbstverständlich die Anzahl an Abgas-Nebendurchtrittsöffnungen im ersten Mischerteil 12 bzw. die Anzahl an Neben-Austrittsöffnungen im zweiten Mischerteil 24 anders gewählt werden könnenn, als in dem dargestellten Ausgestaltungsbeispiel. Dies betrifft auch die Positionierung dieser Öffnungen.

Die Fig. 8 zeigt ein Ausgestaltungsbeispiel einer Abgasanlage 93, bei welcher der vorangehend mit Bezug auf die Fig. 1 bis 7 beschriebene Mischer 10 vorgesehen ist. die Abgasanlage 93 weist ein den Mischer 10 aufnehmendes und den Abgasstrom in Richtung der Abgas-Hauptströmungsrichtung A auf die Anströmseite 18 des ersten Mischerteils 12 zu leitendes Abgasrohr 95 mit einem darin gebildeten Abgaskanal auf. Mit seinem Rand 20 ist das erste Mischerteil 12 an der Innenoberfläche des Abgasrohrs 95 beispielsweise durch Verschweißung festgelegt. Ein im Wesentlichen außerhalb des Abgasrohrs 95 positionierter und beispielsweise im Bereich eines Verbindungsstutzens 94 an dieses angebundener Injektor 97, welcher allgemein eine Reaktionsmitteleinspritzanordnung bereitstellt, gibt das Reaktionsmittel in der Reaktionsmittel-Haupteinspritzrichtung R in den Reaktionsmitteleinspritzkanal 32 ab. Es sei darauf hingewiesen, dass im Allgemeinen das Reaktionsmittel in Form eines Sprühkegels abgegeben wird, wobei die Reaktionsmittel-Haupteinspritzrichtung R einer Zentralachse dieses Sprühkegels entsprechen kann. Das im Mischer 10 gebildete Gemisch aus Abgas und Reaktionsmittel verlässt den Mischer in Richtung zu einem stromabwärts des Mischers angeordneten SCR-Katalysator 99.

Man erkennt in Fig. 8 deutlich dass die Abgas-Hauptströmungsrichtung A an der Anströmseite 18 des ersten Mischerteils 12 und die Reaktionsmittel-Haupteinspritzrichtung R näherungsweise orthogonal zueinander stehen, was eine sehr effiziente Durchmischung des durch die Abgas-Hauptdurchtrittsöffnung 54 hindurchtretenden Abgasstroms mit dem in den Reaktionsmitteleinspritzkanal 32 eingespritzten Reaktionsmittel bewirkt.

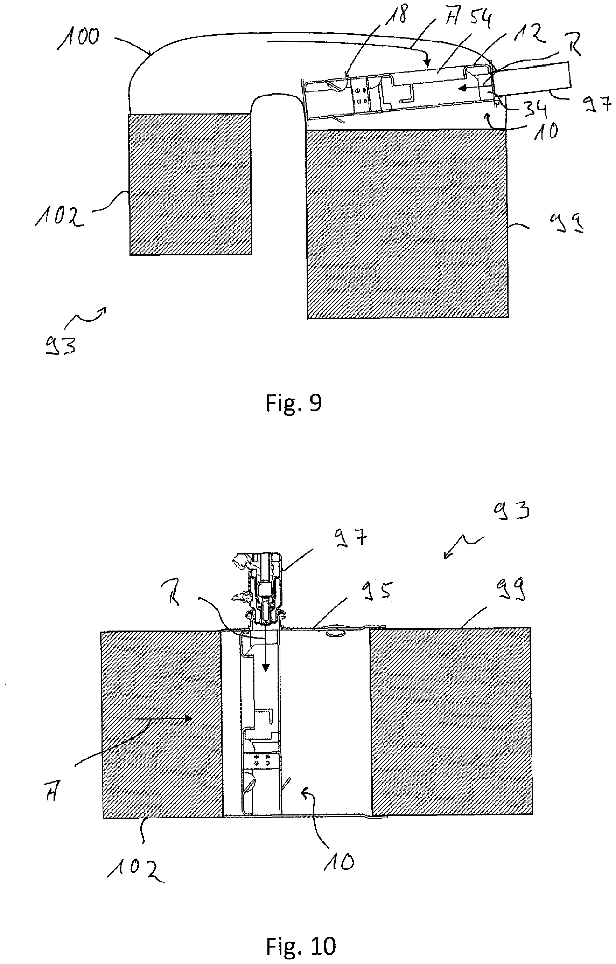

Die Fig. 9 zeigt eine Ausgestaltung einer Abgasanlage 93, bei welcher der Mischer 10 in einem den Abgaskanal bereitstellenden Umlenkgehäuse 100 positioniert ist. Dieses Umlenkgehäuse 100 lenkt den von einem Oxidationskatalysator 102, beispielsweise Diesel-Oxidationskatalysator, abgegebenen Abgasstrom um näherungsweise 180° um in Richtung auf den Mischer 10 bzw. einen stromabwärts des Mischers 10 angeordneten SCR-Katalysator 99 zu.

Auch bei dieser Anordnung weist das auf die Anströmseite 18 des ersten Mischerteils 12 zu strömende Abgas in dem Bereich, in welches es auf das erste Mischerteil 12 auftritt bzw. durch die Abgas-Hauptdurchtrittsöffnung 54 hindurchtritt, eine Abgas-Hauptströmungsrichtung A auf, die zur Reaktionsmittel-Haupteinspritzrichtung R näherungsweise orthogonal ist, wobei das Reaktionsmittel durch den als Reaktionsmitteleinspritzanordnung wirksamen Injektor 97 im Bereich des Aufnahmeendes 34 in den Reaktionsmitteleinspritzkanal 32 eingespritzt wird.

Die Fig. 10 zeigt eine lineare Anordnung von Oxidationskatalysator 102, den Mischer 10 enthaltendem Abgasrohr 95 und SCR-Katalysator 99.

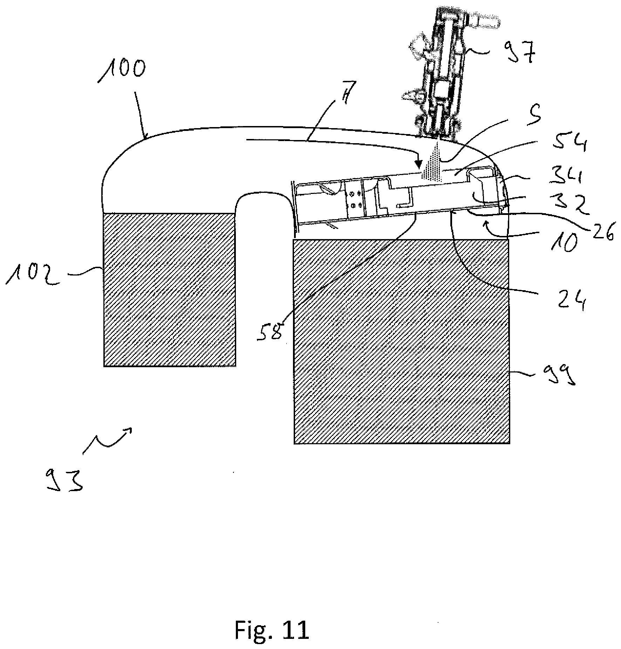

Die Fig. 11 zeigt eine nicht erfindungsgemäße Abwandlung der in Fig. 9 dargestellten Ausgestaltungsform einer Abgasanlage 93, wobei der Unterschied im Wesentlichen in der Positionierung des Injektors 97 zu finden ist. Der Injektor 97 ist am Umlenkgehäuse 100 derart positioniert, dass der von diesem abgegebene Sprühkegel S des Reaktionsmittels durch die Abgas-Hauptdurchtrittsöffnung 54 hindurch in den Reaktionsmitteleinspritzkanal 32 eingeleitet wird. Das Reaktionsmittel trifft dabei auf den der Abgas-Hauptdurchtrittsöffnung 54 gegenüberbeiliegenden Bereich 58 der Bodenwand 26 des zweiten Mischerteils 24 auf, so dass eine die Verdampfung des Reaktionsmittels stärker unterstützende Benetzung des zweiten Mischerteils 24 erreicht wird. Das Aufnahmeende 34 des Reaktionsmitteleinspritzkanals 32 kann beispielsweise durch das Umlenkgehäuse 100 überdeckt bzw. abgeschlossen sein.

## Patentansprüche

1. Mischer für eine Abgasanlage einer Brennkraftmaschine, umfassend:
- ein erstes Mischerteil (12) mit einem plattenartigen Körper (14) mit einer bezüglich einer Abgas-Hauptströmungsrichtung (A) in Richtung stromaufwärts orientiert anzuordnenden Anströmseite (18) und einer bezüglich der Abgas-Hauptströmungsrichtung (A) in Richtung stromabwärts orientiert anzuordnenden Abströmseite (22),
- ein an der Abströmseite (22) des ersten Mischerteils (12) angeordnetes zweites Mischerteil (24) mit einer in Abstand zu dem plattenartigen Körper (14) des ersten Mischerteils (12) angeordneten Bodenwand (26) und zwei von der Bodenwand (26) ausgehenden und auf den plattenartigen Körper (14) des ersten Mischerteils (12) sich zu erstreckenden und an dem ersten Mischerteil (12) festgelegten Seitenwänden (28, 30),
wobei das zweite Mischerteil (24) mit seiner Bodenwand (26) und seinen Seitenwänden (28, 30) und das erste Mischerteil (12) mit seinem plattenartigen Körper (14) einen Reaktionsmitteleinspritzkanal (32) zur Aufnahme von Reaktionsmittel in einer Reaktionsmittel-Haupteinspritzrichtung (R) begrenzen, wobei in dem plattenartigen Körper (14) des ersten Mischerteils (12) wenigstens eine zu dem Reaktionsmitteleinspritzkanal (32) offene Abgas-Hauptdurchtrittsöffnung (54) vorgesehen ist und eine Mehrzahl von an dem Reaktionsmitteleinspritzkanal (32) vorbei führenden Abgas-Nebendurchtrittsöffnungen (78, 80, 82, 84, 86, 88, 90, 92) vorgesehen ist, wobei der Reaktionsmitteleinspritzkanal (32) in einem ersten Bereich (36) des Außenumfangs (16) des ersten Mischerteils (12) an einem Aufnahmeende (34) zur Aufnahme von Reaktionsmittel offen ist und an einem Abgabeende (44) zur Abgabe von Reaktionsmittel oder/und Abgas offen ist, **dadurch gekennzeichnet, dass** am Abgabeende (44) die Bodenwand (26) des zweiten Mischerteils (12) sich mit einem Bodenwand-Verlängerungsbereich (38) über die Seitenwände (28, 30) des zweiten Mischerteils (12) hinaus erstreckt.

2. Mischer nach Anspruch 1, **gekennzeichnet durch** wenigstens eines der folgenden Merkmale a), b), c):
a) der plattenartige Körper (14) des ersten Mischerteils (12) und die Bodenwand (26) des zweiten Mischerteils (24) sind zueinander im Wesentlichen parallel angeordnet,
b) die beiden Seitenwände (28, 30) des zweiten Mischerteils (24) sind zueinander im Wesentlichen parallel angeordnet,
c) die beiden Seitenwände (28, 30) des zweiten Mischerteils (24) sind zu der Bodenwand (26) des zweiten Mischerteils (24) oder/und dem plattenartigen Körper (14) des ersten Mischerteils (12) im Wesentlichen orthogonal angeordnet.

3. Mischer nach Anspruch 1 oder 2, **dadurch gekennzeichnet, dass** an einem Außenumfang (16) des ersten Mischerteils (12) ein von dem plattenartigen Körper (14) in Richtung von der Anströmseite (18) weg sich erstreckender Umfangsrand (20) vorgesehen ist.

4. Mischer nach einem der vorangehenden Ansprüche, **dadurch gekennzeichnet, dass** in dem ersten Bereich (36) des Außenumfangs (16) des ersten Mischerteils (12) eine Außenumfangskontur der Bodenwand (26) des zweiten Mischerteils (24) im Wesentlichen einer Außenumfangskontur des ersten Mischerteils (12) entspricht.

5. Mischer nach Anspruch 4, **dadurch gekennzeichnet, dass** der Bodenwand-Verlängerungsbereich (38) sich im Wesentlichen bis zu einem zweiten Bereich (40) des Außenumfangs (16) des ersten Mischerteils (12) erstreckt, und dass in dem zweiten Bereich (40) des Außenumfangs (16) des ersten Mischerteils (12) eine Außenumfangskontur des Bodenwand-Verlängerungsbereichs (38) des zweiten Mischerteils (24) im Wesentlichen einer Außenumfangskontur des ersten Mischerteils (12) entspricht.

6. Mischer nach einem der vorangehenden Ansprüche, **dadurch gekennzeichnet, dass** zwischen dem Bodenwand-Verlängerungsbereich (38) des zweiten Mischerteils (24) und dem plattenartigen Körper (14) des ersten Mischerteils (12) eine sich im Wesentlichen quer zu der Reaktionsmittel-Haupteinspritzrichtung (R) erstreckende Ablenkwand (42) angeordnet ist, vorzugsweise wobei die Ablenkwand (42) im Wesentlichen W-förmig oder V-förmig ausgebildet ist.

7. Mischer nach Anspruch 6, **dadurch gekennzeichnet, dass** die Ablenkwand (42) mit dem plattenartigen Körper (14) des ersten Mischerteils (12), dem Bodenwand-Verlängerungsbereich (38) des zweiten Mischerteils (24) und jeder der Seitenwände (28, 30) des zweiten Mischerteils (24) jeweils eine Haupt-Austrittsöffnung (46, 48) des Reaktionsmitteleinspritzkanals (32) begrenzt.

8. Mischer nach einem der vorangehenden Ansprüche, **dadurch gekennzeichnet, dass** die Abgas-Hauptdurchtrittsöffnung (54) bezogen auf die Abgas-Hauptströmungsrichtung (A) und einen zentralen Bereich des plattenartigen Körpers (14) des ersten Mischerteils (12) in einem von einem radial äußeren Ende der Abgas-Hauptdurchtrittsöffnung (54) ausgehenden ersten radialen Erstreckungsbereich eine zunehmende Öffnungsbreite und in einem zu einem radial inneren Ende der Abgas-Hauptdurchtrittsöffnung führenden zweiten radialen Erstreckungsbereich eine abnehmende Öffnungsbreite aufweist, wobei eine Länge des zweiten radialen Erstreckungsbereichs größer ist, als eine Länge des ersten radialen Erstreckungsbereichs.

9. Mischer nach einem der vorangehenden Ansprüche, **gekennzeichnet durch** wenigstens eines der folgenden Merkmale d), e):
d) die Abgas-Nebendurchtrittsöffnungen (78, 80, 82, 84,86, 88, 90, 92) umfassen eine Mehrzahl lochartig ausgebildeter erster Abgas-Nebendurchtrittsöffnungen (78),
e) die Abgas-Nebendurchtrittsöffnungen (78, 80, 82, 84, 86, 88, 90, 92) umfassen eine Mehrzahl zweiter Abgas-Nebendurchtrittsöffnungen (80, 82, 84, 86, 88, 90, 92), wobei am ersten Mischerteil (12) in Zuordnung zu jeder zweiten Abgas-Nebendurchtrittsöffnung (80, 82, 84, 86, 88, 90, 92) ein Strömungsablenkelement (94, 96) vorgesehen ist, vorzugsweise wobei in Zuordnung zu jeder zweiten Abgas-Nebendurchtrittsöffnung (80, 82, 84, 86, 88, 90, 92) an dem plattenartigen Körper (14) des ersten Mischerteils (12) eine an der Abströmseite (22) hervorstehende Ausformung zum Bereitstellen des Strömungsablenkelements vorgesehen ist, vorzugsweise wobei die Ausformung im Wesentlichen die Form eines Kugelkalottensegments oder einer Ablenkklappe aufweist.

10. Mischer nach Anspruch 7 und Anspruch 9, **dadurch gekennzeichnet, dass** am ersten Mischerteil (12) im Bereich wenigstens einer, vorzugsweise jeder Haupt-Austrittsöffnung (46, 48) eine zweite Abgas-Nebendurchtrittsöffnung (80, 82) vorgesehen ist, wobei das dieser zweiten Abgas-Nebendurchtrittsöffnung (80, 82) zugeordnete Strömungsablenkungselement (94) durch diese hindurchtretendes Abgas in Richtung vom Reaktionsmitteleinspritzkanal (32) weg ablenkt.

11. Mischer nach einem der vorangehenden Ansprüche, **dadurch gekennzeichnet, dass** in dem zweiten Mischerteil (24) eine Mehrzahl von Neben-Austrittsöffnungen (60, 62, 64) vorgesehen ist.

12. Mischer nach Anspruch 11, **gekennzeichnet durch** wenigstens eines der beiden folgenden Merkmale f), g):
f) die Neben- Austrittsöffnungen (60, 62, 64) umfassen eine Mehrzahl lochartig ausgebildeter erster Neben-Austrittsöffnungen (60),
g) die Neben-Austrittsöffnungen (60, 62, 64) umfassen eine Mehrzahl zweiter Neben-Austrittsöffnungen (62, 64), wobei am zweiten Mischerteil (24) in Zuordnung zu jeder zweiten Neben-Austrittsöffnung (62, 64) ein Strömungsablenkelement (66, 68) vorgesehen ist, vorzugsweise wobei in Zuordnung zu jeder zweiten Neben-Austrittsöffnung (62, 64) an dem zweiten Mischerteil (24) eine Ausformung zum Bereitstellen des Strömungsablenkelements (66, 68) vorgesehen ist, vorzugsweise wobei die Ausformung im Wesentlichen die Form eines Kugelkalottensegments oder einer Ablenkklappe aufweist.

13. Mischer nach einem der vorangehenden Ansprüche, **dadurch gekennzeichnet, dass** an wenigstens einer, vorzugsweise jeder der Seitenwände (28, 30) des zweiten Mischerteils (24) ein in Richtung vom Reaktionsmitteleinspritzkanal (32) weg orientiertes Strömungsablenkelement (50, 52) vorgesehen, vorzugsweise wobei das Strömungsablenkelement (50, 52) die Form einer Ablenkklappe aufweist.

14. Mischer nach einem der vorangehenden Ansprüche, **dadurch gekennzeichnet, dass** das erste Mischerteil (12) oder/und das zweite Mischerteil (24) als Blechumformteil ausgebildet ist.

15. Abgasanlage für eine Brennkraftmaschine, umfassend einen von Abgas durchströmbaren Abgaskanal und einen in dem Abgaskanal derart angeordneten Mischer (10) nach einem der vorangehenden Ansprüche, dass das erste Mischerteil (12) mit seiner Anströmseite (18) im Wesentlichen orthogonal zur Abgas-Hauptströmungsrichtung (A) im Bereich des Mischers (10) orientiert ist.

16. Abgasanlage nach Anspruch 15, **dadurch gekennzeichnet, dass** eine Reaktionsmitteleinspritzanordnung (97) zum Einspritzen von Reaktionsmittel in den Reaktionsmitteleinspritzkanal (32) vorgesehen ist,
vorzugsweise wobei die Reaktionsmittel-Haupteinspritzrichtung (R) im Wesentlichen orthogonal zur Abgas-Hauptströmungsrichtung (A) im Abgaskanal an der Anströmseite (18) des ersten Mischerteils (10) ist oder die Reaktionsmitteleinspritzanordnung (97) zum Einspritzen von Reaktionsmittel in den Reaktionsmitteleinspritzkanal (32) durch die Abgas-Hauptdurchtrittsöffnung (54) angeordnet ist.

## Claims

1. Mixer for an exhaust system of an internal combustion engine, comprising
- a first mixer part (12) with a plate-like body (14) with an incoming flow side (18) to be arranged oriented in the upstream direction with respect to an exhaust gas main flow direction (A) and with an outflow side (22) to be arranged oriented in the downstream direction with respect to the exhaust gas main flow direction (A), and
- a second mixer part (24) arranged on the outflow side (22) of the first mixer part (12) with a bottom wall (26) arranged at a spaced location from the plate-like body (14) of the first mixer part (12) and with two side walls (28, 30), which extend starting from the bottom wall (26) and extend towards the plate-like body (14) of the first mixer part (12) and are fixed at the first mixer part (12),
wherein the second mixer part (24) with its bottom wall (26) and with its side walls (28, 30) and the first mixer part (12) with its plate-like body (14) define a reactant injection duct (32) for receiving reactant in a reactant main injection direction (R), wherein at least one exhaust gas main passage opening (54) open towards the reactant injection duct (32) is provided in the plate-like body (14) of the first mixer part (12) and a plurality of exhaust gas secondary passage openings (78, 80, 82, 84, 86, 88, 90, 92) running past the reactant injection duct (32) are provided,
wherein the reactant injection duct (32) is open in a first area (36) of the outer circumference (16) of the first mixer part (12) at a receiving end (34) for receiving reactant, and is open at a releasing end (44) for releasing reactant or/and exhaust gas, **characterized in that** the bottom wall (26) of the second mixer part (12) extends at the releasing end (44) with a bottom wall extension area (38) beyond the side walls (28, 30) of the second mixer part (12).

2. Mixer in accordance with claim 1, **characterized by** at least one of the following aspects a), b), c):
a) the plate-like body (14) of the first mixer part (12) and the bottom wall (26) of the second mixer part (24) are arranged essentially parallel to one another,
b) the two side walls (28, 30) of the second mixer part (24) are arranged essentially parallel to one another,
c) the two side walls (28, 30) of the second mixer part (24) are arranged essentially at right angles with respect to the bottom wall (26) of the second mixer part (24) or/and with respect to the plate-like body (14) of the first mixer part (12).

3. Mixer in accordance with claim 1 or 2, **characterized in that** a circumferential edge (20) extending away from the plate-like body (14) in the direction away from the incoming flow side (18) is provided at a circumferential edge (16) of the first mixer part (12).

4. Mixer in accordance with one of the above claims, **characterized in that** in the first area (36) of the outer circumference (16) of the first mixer part (12), an outer circumferential contour of the bottom wall (26) of the second mixer part (24) corresponds essentially to an outer circumferential contour of the first mixer part (12).

5. Mixer in accordance with claim 4, **characterized in that** the bottom wall extension area (38) extends essentially up to a second area (40) of the outer circumference (16) of the first mixer part (12), and that in the second area (40) of the outer circumference (16) of the first mixer part (12) an outer circumferential contour of the bottom wall extension area (38) of the second mixer part (24) corresponds essentially to an outer circumferential contour of the first mixer part (12).

6. Mixer in accordance with one of the preceding claims, **characterized in that** a deflecting wall (42) extending essentially at right angles to the reactant main injection direction (R) is arranged between the bottom wall extension area (38) of the second mixer part (24) and the plate-like body (14) of the first mixer part (12), preferably wherein the deflecting wall (42) has an essentially W-shaped or V-shaped configuration.

7. Mixer in accordance with claim 6, **characterized in that** the deflecting wall (42) defines a respective main discharge opening (46, 48) of the reactant injection duct (32) with the plate-like body (14) of the first mixer part (12), with the bottom wall extension area (38) of the second mixer part (24) and with each of the side walls (28, 30) of the second mixer part (24).

8. Mixer in accordance with one of the preceding claims, **characterized in that** the exhaust gas main passage opening (54) has an increasing opening width with respect to the exhaust gas main flow direction (A) and to a central area of the plate-like body (14) of the first mixer part (12) in a first radial extension area originating from a radially outer end of the exhaust gas main passage opening (54) and a decreasing opening width in a second radial extension area leading to a radially inner end of the exhaust gas main passage opening, a length of the second radial extension area being greater than a length of the first radial extension area.

9. Mixer in accordance with one of the above claims, **characterized by** at least one of the following aspects d), e):
a) the exhaust gas secondary passage openings (78, 80, 82, 84, 86, 88, 90, 92) comprise a plurality of first exhaust gas secondary passage openings (78) having a hole-like configuration,
b) the exhaust gas secondary passage openings (78, 80, 82, 84, 86, 88, 90, 92) comprise a plurality of second exhaust gas secondary passage openings (80, 82, 84, 86, 88, 90, 92), wherein a flow deflection element (94, 96) is provided at the first mixer part (12) in association with each second exhaust gas secondary passage opening (80,82, 84, 86, 88, 90, 92), preferably wherein a bulge projecting on the outflow side (22) is provided for providing the flow deflection element at the plate-like body (14) of the first mixer part (12) in association with each second exhaust gas secondary passage opening (80, 82, 84, 86, 88, 90, 92), preferably wherein the bulge has essentially the form of a calotte shell segment or of a deflecting flap.

10. Mixer in accordance with claim 7 and claim 9, **characterized in that** a second exhaust gas secondary passage opening (80, 82) is provided at the first mixer part (12) in the area of at least one and preferably each main discharge opening (46, 48), wherein the flow deflection element (94) associated with this second exhaust gas secondary passage opening (80, 82) deflects exhaust gas passing through this opening in the direction away from the reactant injection duct (32).

11. Mixer in accordance with one of the above claims, **characterized in that** a plurality of secondary discharge openings (60, 62, 64) are provided in the second mixer part (24).

12. Mixer in accordance with claim 11, **characterized by** at least one of the two following aspects f), g):
f) the secondary discharge openings (60, 62, 64) comprise a plurality of first secondary discharge openings (60) having a hole-like configuration,
g) the secondary discharge openings (60, 62, 64) comprise a plurality of second secondary discharge openings (62, 64), wherein a flow deflection element (66, 68) is provided at the second mixer part (24) in association with each second secondary discharge opening (62, 64), preferably wherein in association to each secondary discharge openings (62, 64) a bulge is provided at the second mixer part (24) for providing the flow deflection element (66, 68), preferably wherein the bulge has essentially the form of a calotte shell segment or of a deflecting flap.

13. Mixer in accordance with one of the above claims, **characterized in that** a flow deflection element (50, 52) oriented in the direction away from the reactant injection duct (32) is provided at at least one and preferably each of the side walls (28, 30) of the second mixer part (24), preferably wherein the flow deflection element (50, 52) has the form of a deflecting flap.

14. Mixer in accordance with one of the above claims, **characterized in that** the first mixer part (12) or/and the second mixer part (24) is configured as a shaped sheet metal part.

15. Exhaust system for an internal combustion engine, comprising an exhaust gas duct, through which exhaust gas can flow, and a mixer (10) in accordance with one of the above claims, which is arranged in the exhaust gas duct such that the first mixer part (12) is oriented with its incoming flow side (18) essentially at right angles to the exhaust gas main flow direction (A) in the area of the mixer (10).

16. Exhaust system in accordance with claim 15, **characterized in that** a reactant injection device (97) is provided for injecting reactant into the reactant injection duct (32), preferably wherein the reactant main injection direction (R) is essentially at right angles to the exhaust gas main flow direction (A) in the exhaust gas duct on the incoming flow side (18) of the first mixer part (10), or the reactant injection device (97) is arranged for injecting reactant into the reactant injection duct (32) through the exhaust gas main passage opening (54).

## Revendications

1. Mélangeur pour un système d'échappement d'un moteur à combustion interne, comprenant
- une première partie de mélangeur (12) avec un corps en forme de plaque (14) avec un côté d'écoulement entrant (18) à disposer dans la direction amont par rapport à une direction d'écoulement principale des gaz d'échappement (A) et avec un côté d'écoulement sortant (22) à disposer dans la direction aval par rapport à la direction d'écoulement principale des gaz d'échappement (A), et
- une deuxième partie de mélangeur (24) disposée sur le côté d'écoulement sortant (22) de la première partie de mélangeur (12) avec une paroi de fond (26) disposée à distance du corps en forme de plaque (14) de la première partie de mélangeur (12) et avec deux parois latérales (28, 30), qui s'étendent à partir de la paroi de fond (26) et s'étendent vers le corps en forme de plaque (14) de la première partie de mélangeur (12) et sont fixées à la première partie de mélangeur (12),
dans lequel la deuxième partie de mélangeur (24) avec sa paroi de fond (26) et avec ses parois latérales (28, 30) et la première partie de mélangeur (12) avec son corps en forme de plaque (14) définissent un conduit d'injection de réactif (32) pour recevoir le réactif dans une direction d'injection principale de réactif (R), dans lequel au moins une ouverture de passage principal de gaz d'échappement (54) ouverte vers le conduit d'injection de réactif (32) est prévue dans le corps en forme de plaque (14) de la première partie de mélangeur (12) et une pluralité d'ouvertures de passage secondaire de gaz d'échappement (78, 80, 82, 84, 86, 88, 90, 92) passant devant le conduit d'injection de réactif (32) sont prévues,
dans lequel le conduit d'injection de réactif (32) est ouvert dans une première zone (36) de la circonférence extérieure (16) de la première partie de mélangeur (12) au niveau d'une extrémité de réception (34) pour recevoir du réactif, et est ouvert au niveau d'une extrémité de décharge (44) pour décharger du réactif et/ou les gaz d'échappement, **caractérisé en ce que** la paroi de fond (26) de la deuxième partie de mélangeur (12) s'étend au niveau de l'extrémité de décharge (44) avec une zone d'extension de paroi de fond (38) au-delà des parois latérales (28, 30) de la deuxième partie de mélangeur (12).

2. Mélangeur selon la revendication 1, **caractérisé par** au moins un des aspects suivants a), b), c) :
a) le corps en forme de plaque (14) de la première partie de mélangeur (12) et la paroi de fond (26) de la deuxième partie de mélangeur (24) sont disposés essentiellement parallèlement l'un à l'autre,
b) les deux parois latérales (28, 30) de la deuxième partie de mélangeur (24) sont disposées essentiellement parallèlement l'une à l'autre,
c) les deux parois latérales (28, 30) de la deuxième partie de mélangeur (24) sont disposées essentiellement à angle droit par rapport à la paroi de fond (26) de la deuxième partie de mélangeur (24) et/ou par rapport au corps en forme de plaque (14) de la première partie de mélangeur (12).

3. Mélangeur selon la revendication 1 ou 2, **caractérisé en ce qu'**un bord circonférentiel (20) s'étendant à partir du corps en forme de plaque (14) dans la direction opposée au côté d'écoulement entrant (18) est prévu au niveau d'un bord circonférentiel (16) de la première partie de mélangeur (12).

4. Mélangeur selon l'une des revendications précédentes, **caractérisé en ce que** dans la première zone (36) de la circonférence extérieure (16) de la première partie de mélangeur (12), un contour circonférentiel extérieur de la paroi de fond (26) de la deuxième partie de mélangeur (24) correspond essentiellement à un contour circonférentiel extérieur de la première partie de mélangeur (12).

5. Mélangeur selon la revendication 4, **caractérisé en ce que** la zone d'extension de la paroi de fond (38) s'étend essentiellement jusqu'à une deuxième zone (40) de la circonférence extérieure (16) de la première partie de mélangeur (12), et **en ce que** dans la deuxième zone (40) de la circonférence extérieure (16) de la première partie de mélangeur (12), un contour circonférentiel extérieur de la zone d'extension de la paroi de fond (38) de la deuxième partie de mélangeur (24) correspond essentiellement à un contour circonférentiel extérieur de la première partie de mélangeur (12).

6. Mélangeur selon l'une des revendications précédentes, **caractérisé en ce qu'**une paroi de déviation (42) s'étendant essentiellement à angle droit par rapport à la direction d'injection principale du réactif (R) est disposée entre la zone d'extension de la paroi de fond (38) de la deuxième partie de mélangeur (24) et le corps en forme de plaque (14) de la première partie de mélangeur (12), de préférence dans lequel la paroi de déviation (42) a une configuration essentiellement en forme de W ou de V.

7. Mélangeur selon la revendication 6, **caractérisé en ce que** la paroi de déviation (42) définit une ouverture de décharge principale respective (46, 48) du conduit d'injection de réactif (32) avec le corps en forme de plaque (14) de la première partie de mélangeur (12), avec la zone d'extension de la paroi de fond (38) de la deuxième partie de mélangeur (24) et avec chacune des parois latérales (28, 30) de la deuxième partie de mélangeur (24).

8. Mélangeur selon l'une des revendications précédentes, **caractérisé en ce que** l'ouverture de passage principal des gaz d'échappement (54) présente une largeur d'ouverture croissante par rapport à la direction d'écoulement principal des gaz d'échappement (A) et à une zone centrale du corps en forme de plaque (14) de la première partie de mélangeur (12) dans une première zone d'extension radiale partant d'une extrémité radialement extérieure de l'ouverture de passage principal des gaz d'échappement (54) et une largeur d'ouverture décroissante dans une deuxième zone d'extension radiale menant à une extrémité radialement intérieure de l'ouverture de passage principal des gaz d'échappement, une longueur de la deuxième zone d'extension radiale étant supérieure à une longueur de la première zone d'extension radiale.

9. Mélangeur selon l'une des revendications précédentes, **caractérisé par** au moins l'un des aspects suivants d), e) :
a) les ouvertures de passage secondaire des gaz d'échappement (78, 80, 82, 84, 86, 88, 90, 92) comprennent une pluralité de premières ouvertures de passage secondaire des gaz d'échappement (78) ayant une configuration en forme de trou,
b) les ouvertures de passage secondaire de gaz d'échappement (78, 80, 82, 84, 86, 88, 90, 92) comprennent une pluralité de deuxièmes ouvertures de passage secondaire de gaz d'échappement (80, 82, 84, 86, 88, 90, 92), dans lequel un élément de déviation d'écoulement (94, 96) est prévu au niveau de la première partie de mélangeur (12) en association avec chaque deuxième ouverture de passage secondaire de gaz d'échappement (80, 82, 84, 86, 88, 90, 92), de préférence dans lequel un renflement faisant saillie sur le côté d'écoulement sortant (22) est prévu pour fournir l'élément de déviation d'écoulement au corps en forme de plaque (14) de la première partie de mélangeur (12) en association avec chaque deuxième ouverture de passage secondaire de gaz d'échappement (80, 82, 84, 86, 88, 90, 92), de préférence dans lequel le renflement a essentiellement la forme d'un segment de coquille de calotte ou d'un volet de déviation.

10. Mélangeur selon la revendication 7 et la revendication 9, **caractérisé en ce qu'**une deuxième ouverture de passage secondaire de gaz d'échappement (80, 82) est prévue sur la première partie de mélangeur (12) dans la zone d'au moins une et de préférence de chaque ouverture de décharge principale (46, 48), l'élément de déviation d'écoulement (94) associé à cette deuxième ouverture de passage secondaire de gaz d'échappement (80, 82) déviant les gaz d'échappement passant à travers cette ouverture dans la direction opposée au conduit d'injection de réactif (32).

11. Mélangeur selon l'une des revendications précédentes, **caractérisé en ce qu'**une pluralité d'ouvertures de décharge secondaires (60, 62, 64) sont prévues dans la deuxième partie de mélangeur (24).

12. Mélangeur selon la revendication 11, **caractérisé par** au moins un des deux aspects suivants f), g) :
f) les ouvertures de décharge secondaires (60, 62, 64) comprennent une pluralité de premières ouvertures de décharge secondaires (60) ayant une configuration en forme de trou,
g) les ouvertures de décharge secondaires (60, 62, 64) comprennent une pluralité de deuxièmes ouvertures de décharge secondaires (62, 64), dans lequel un élément de déviation d'écoulement (66, 68) est prévu au niveau de la deuxième partie de mélangeur (24) en association avec chaque deuxième ouverture de décharge secondaire (62, 64), de préférence dans lequel en association avec chaque ouverture de décharge secondaire (62, 64) un renflement est prévu au niveau de la deuxième partie de mélangeur (24) pour fournir l'élément de déviation d'écoulement (66, 68), de préférence dans lequel le renflement a essentiellement la forme d'un segment de coquille de calotte ou d'un volet de déviation.

13. Mélangeur selon l'une des revendications précédentes, **caractérisé en ce qu'**un élément de déviation d'écoulement (50, 52) orienté dans la direction opposée au conduit d'injection de réactif (32) est prévu sur au moins une et de préférence chacune des parois latérales (28, 30) de la deuxième partie de mélangeur (24), de préférence dans lequel l'élément de déviation d'écoulement (50, 52) a la forme d'un volet de déviation.

14. Mélangeur selon l'une des revendications précédentes, **caractérisé en ce que** la première partie de mélangeur (12) ou/et la deuxième partie de mélangeur (24) est configurée comme une pièce de tôle façonnée.

15. Système d'échappement pour un moteur à combustion interne, comprenant un conduit de gaz d'échappement pouvant être traversé par le gaz d'échappement et un mélangeur (10) selon l'une des revendications précédentes, qui est disposé dans le conduit de gaz d'échappement de telle sorte que la première partie de mélangeur (12) est orientée avec son côté d'écoulement entrant (18) essentiellement à angle droit par rapport à la direction d'écoulement principale du gaz d'échappement (A) dans la zone du mélangeur (10).

16. Système d'échappement selon la revendication 15, **caractérisé en ce qu'**un dispositif d'injection de réactif (97) est prévu pour injecter un réactif dans le conduit d'injection de réactif (32), de préférence dans lequel la direction d'injection principale de réactif (R) est essentiellement à angle droit par rapport à la direction d'écoulement principale de gaz d'échappement (A) dans le conduit de gaz d'échappement sur le côté d'écoulement entrant (18) de la première partie de mélangeur (10), ou le dispositif d'injection de réactif (97) est disposé pour injecter un réactif dans le conduit d'injection de réactif (32) à travers l'ouverture de passage principale des gaz d'échappement (54).
